# EUROPEAN PATENT APPLICATION

(11) **EP 3 417 977 A1**
(43) Date of publication of application: **26.12.2018**
(21) Application number: 17753062.3
(22) Date of filing: 09.02.2017
(51) Int. Cl.: B23K 9/12, B23K 9/022, B23K 9/30, B25J 13/00, B25J 17/02, B23K 11/11, B23K 26/08

(54) **WELDING DEVICE AND METHOD FOR CONTROLLING WELDING DEVICE**

(30) Priority: 17.02.2016 JP 2016027889
(71) Applicant: Kabushiki Kaisha Kobe Seiko Sho (Kobe Steel, Ltd.), Kobe-shi, Hyogo 651-8585 (JP)
(72) Inventor: SHIKA, Yuki, Kanagawa 251-8551 (JP); MINATO, Tatsuji, Kanagawa 251-8551 (JP)
(74) Representative: Müller-Boré & Partner Patentanwälte PartG mbB
(86) International application number: PCT/JP2017/004700
(87) International publication number: WO 2017/141804

(57) **Abstract**

A welding device (100) is provided with: an articulated robot (11) having a plurality of drive axes; an end effector (23) supported by the articulated robot; a distal-end axis drive mechanism (21) which is disposed between a distal-endmost drive axis (19) of the articulated robot and the end effector, and which causes the distal-end axis of the end effector to perform a weaving operation; and a drive control unit (41) which drives the articulated robot and the distal-end axis drive mechanism. The distal-end axis drive mechanism includes a first axial drive unit for driving in a first axial direction perpendicular to the distal-end axis of the end effector, and a second axial drive unit for driving in a second axial direction perpendicular to the distal-end axis and the first axial direction.

## Description

### Technical Field

The present invention relates to a welding apparatus and a method for controlling a welding apparatus.

### Background Art

When welding work is performed using an articulated robot, weaving may be performed to obtain a proper bead width, penetration shape, and welding amount or obtain a tracking function by arc. Weaving is an electrode manipulation method of deflecting a welding torch held by an articulated robot in a direction perpendicularly to a welding line. Better welding is enabled as the accuracy of a weaving control is higher.

In principle, conventional weaving controls using a common 6-axis robot enable weaving for a welding line in every direction. However, for certain welding conditions, there may occur a case where weaving cannot be performed at a high speed. This is because the limit frequency of accurate weaving is determined by the stiffness of a robot, the natural frequency or the like and is lowered by a drive shaft in which the stiffness of the robot is low. That is, the stiffness of a drive shaft of a robot is a factor that may make it difficult to perform weaving with high accuracy at a high frequency.

As for weaving controls of an articulated robot that are associated with the above problem, for example, improvement techniques have been proposed as disclosed in Patent documents 1 and 2.

In a welding robot of Patent document 1, the tip of a welding torch is offset from the axial line of a robot tip shaft and rotation of the tip of the welding torch about the axial line of the robot tip shaft is enabled by driving the robot tip shaft rotationally. A control device of the welding robot weaves the tip of the welding torch in a direction that crosses a welding line using only the robot tip shaft. In this case, the inertia of the robot tip shaft is smaller than that of each of the other shafts. Thus, by performing weaving using only the robot tip shaft, weaving can be performed with higher accuracy at a high frequency as compared with the case of performing it using a plurality of shafts.

In a welding robot of Patent document 2, an instruction amplitude of a motor is determined taking into consideration differences between response speeds of respective weaving-related shafts, differences in response speed due to the magnitudes of the weaving frequency and the instruction amplitude, and a difference in response speed due to the inertia of each weaving-related shaft. With this measure, the electrode manipulation locus based on a weaving control is made accurate and the weaving accuracy is thereby increased.

### Prior Art Documents

### Patent Documents

Patent document 1: JP-A-2013-56359
Patent document 2: JP-A-H07-24574

### Summary of the Invention

### Technical Problems

In the welding robot used in the weaving control method of Patent document 1, weaving can be performed with high accuracy at a high frequency because the tip of the welding torch is offset from the axial line of the tip shaft and the tip of the welding torch is rotated about the axial line of the tip shaft by rotating the tip shaft. However, in this method, it is difficult to employ a complicated weaving pattern due to the mechanism thereof.

In Patent document 2, an instruction amplitude is determined taking into consideration the factors that influence the weaving amplitude, other than the weaving frequency. In particular, sinusoidal waves of 1 to 10 Hz in frequency and 2 to 10 mm in amplitude can be realized. However, no consideration is given to weaving patterns other than a sinusoidal wave pattern or a weaving operation in weaving frequencies equal to or higher than 10 Hz.

Furthermore, vibration at a weaving frequency is applied to the robot shafts. When the weaving frequency is close to the natural frequency of the robot, a resonance phenomenon occurs to increase the weaving amplitude and render the main body of the robot unstable. Thus, the weaving frequency should be set so as to avoid the natural frequency of the robot, which restricts weaving conditions that can be applied to welding.

An object of the present invention is therefore to provide a welding apparatus and method for controlling a welding apparatus, which make it possible to perform a weaving control with high accuracy at a high frequency using various weaving patterns without being restricted by the natural frequency of a robot in performing welding using an articulated robot.

### Solution to Problems

The present invention includes the following constitutions.
(1) A welding apparatus comprising:
   an articulated robot having a plurality of drive shafts;
   an end effector supported by the articulated robot;
   a tip shaft drive mechanism which is provided between a tip drive shaft of the articulated robot and the end effector and allows a tip shaft of the end effector to perform a weaving operation; and
   a drive control unit which drives the articulated robot and the tip shaft drive mechanism,
   wherein the tip shaft drive mechanism has a first-axis drive unit which drives the tip shaft in a first-axis direction that is perpendicular to the tip shaft of the end effector and a second-axis drive unit which drives the tip shaft in a second-axis direction that is perpendicular to the tip shaft and the first-axis direction.
(2) A welding apparatus comprising:
   an articulated robot having a plurality of drive shafts;
   an end effector supported by the articulated robot;
   a tip shaft drive mechanism which is provided between a tip drive shaft of the articulated robot and the end effector and allows a tip shaft of the end effector to perform a weaving operation; and
   a drive control unit which drives the articulated robot and the tip shaft drive mechanism, wherein:
      the drive control unit comprises:
         a main-direction drive unit which allows the end effector to move along a welding line by driving the articulated robot; and
         a weaving drive unit which allows the tip shaft to perform a weaving movement, and
      in a case where a desired weaving locus of the tip shaft falls within a movable range of the tip shaft of the tip shaft drive mechanism, the weaving drive unit allows the tip shaft to perform a weaving operation that follows the weaving locus by driving the tip shaft drive mechanism, and
      in a case where the desired weaving locus does not fully fall within the movable range, the weaving drive unit allows the tip shaft to perform a weaving operation that follows the weaving locus by determining a supplemental movement distance of an excessive portion of a weaving movement component of the weaving locus beyond a movement limit of the movable range, driving the tip shaft drive mechanism up to the movement limit, and driving at least one of the drive shafts included in the articulated robot depending on the supplemental movement distance.
(3) A method for controlling a welding apparatus, which uses a welding apparatus,
   the welding apparatus comprising:
   an articulated robot having a plurality of drive shafts;
   an end effector supported by the articulated robot;
   a tip shaft drive mechanism which is provided between a tip drive shaft of the articulated robot and the end effector and allows a tip shaft of the end effector to perform a weaving operation; and
   a drive control unit which drives the articulated robot and the tip shaft drive mechanism,
   wherein the method comprises driving the tip shaft drive mechanism to move the tip shaft of the end effector in a first-axis direction that is perpendicular to the tip shaft and in a second-axis direction that is perpendicular to the tip shaft and the first-axis direction.
(4) A method for controlling a welding apparatus, which uses a welding apparatus,
   the welding apparatus comprising:
   an articulated robot having a plurality of drive shafts;
   an end effector supported by the articulated robot;
   a tip shaft drive mechanism which is provided between a tip drive shaft of the articulated robot and the end effector and allows a tip shaft of the end effector to perform a weaving operation; and
   a drive control unit which drives the articulated robot and the tip shaft drive mechanism; wherein
   when a weaving operation of the tip shaft of the end effector is performed along a welding line to follow a desired weaving locus,
   in a case where the desired weaving locus falls within a movable range of the tip shaft of the tip shaft drive mechanism, the method comprises driving the tip shaft drive mechanism, thereby performing the weaving operation that follows the weaving locus, and
   in a case where the desired weaving locus does not fully fall within the movable range, the method comprises determining a supplemental movement distance of an excessive portion of a weaving movement component of the weaving locus beyond a movement limit of the movable range, driving the tip shaft drive mechanism up to the movement limit, and driving at least one of the drive shafts included in the articulated robot depending on the supplemental movement distance, thereby performing the weaving operation that follows the weaving locus.

### Advantageous Effects of the Invention

The present invention makes it possible to perform a weaving control with high accuracy at a high frequency using various weaving patterns with the weaving frequency not restricted by the natural frequency of a robot.

### Brief Description of the Drawings

FIG. 1 is a schematic diagram showing the overall configuration of a welding apparatus.
FIG. 2 is a perspective view of an appearance of an articulated robot as an example.
FIG. 3 is an enlarged view of a 2-axis weaver shown in FIG. 2.
FIG. 4 is a control block diagram for driving a robot and 2-axis weaver by a drive control unit.
FIG. 5 is a graph illustrating a movement locus including weaving movement components.
FIG. 6 is a diagram illustrating an example that a welding torch interferes with a member adjacent to the torch.
FIG. 7 is a flowchart showing the procedure of a weaving control method.
FIG. 8A is a schematic diagram showing a weaving pattern.
FIG. 8B is a schematic diagram showing a weaving pattern.
FIG. 8C is a schematic diagram showing a weaving pattern.

### Description of Embodiments

Embodiment(s) of the present invention are hereinafter described in detail with reference to the drawings.

### <Overall configuration of welding apparatus>

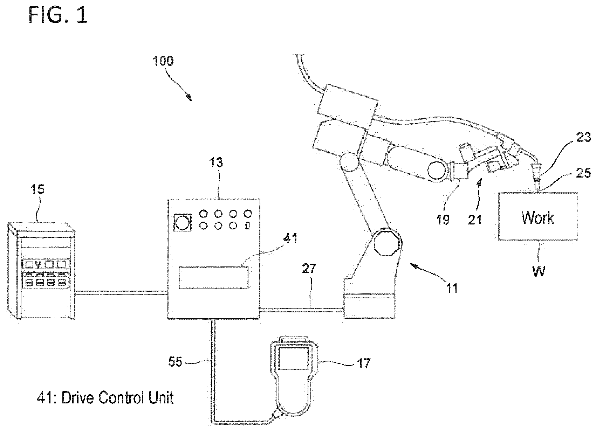

FIG. 1 is a schematic diagram showing the overall configuration of a welding apparatus 100.

The welding apparatus 100 having this configuration includes an articulated robot 11 having a plurality of drive shafts, a control device 13, a welding power source 15, and a teaching controller 17 which is connected to the control device 13. A 2-axis weaver 21 as a tip shaft drive mechanism is provided at a tip drive shaft 19 of the articulated robot 11. The 2-axis weaver 21 is configured to include a welding torch 23 which is an end effector.

The 2-axis weaver 21 which is provided between the tip drive shaft 19 of the articulated robot 11 and the welding torch 23 has a first drive unit and a second drive unit for relatively moving a tip shaft of the welding torch 23 (described later in detail) relative to the tip drive shaft 19. A weaving operation of the welding torch 23 is performed by driving at least one of the first drive unit and the second drive unit.

The control device 13 moves the tip shaft of the welding torch 23 by driving the articulated robot 11 and the 2-axis weaver 21 on the basis of teaching data that have been input from the teaching controller 17. Although not shown in any drawings, the control device 13 controls the individual units of the welding apparatus 100 as a CPU reads programs stored in a ROM, a RAM, a hard disc drive or the like and runs them.

In a tip shaft of the welding torch 23, a welding wire 25 which is a consumable electrode such as a flux-cored wire or a solid wire is fed from a wire feed device (not shown) by an instruction from the control device 13. The welding power source 15 is connected to the welding torch 23 and the base material of a work W by power cables (not shown), and welding currents are supplied to the individual units via the power cables by an instruction from the control device 13. A shielding gas is supplied to inside of the welding torch 23 from a gas supply unit (not shown).

By the control device 13, a welding current is supplied to the portion between a tip portion of the welding wire 25 and the work W from the welding power source 15, and an arc is generated at the tip shaft of the welding torch 23 which is in a shielding gas atmosphere. Then, the arc-generated welding torch 23 is moved so as to follow a pre-instructed locus. The work W is welded in this manner.

Next, the configurations of the individual units of the welding apparatus 100 are described in more detail.

### <Articulated robot>

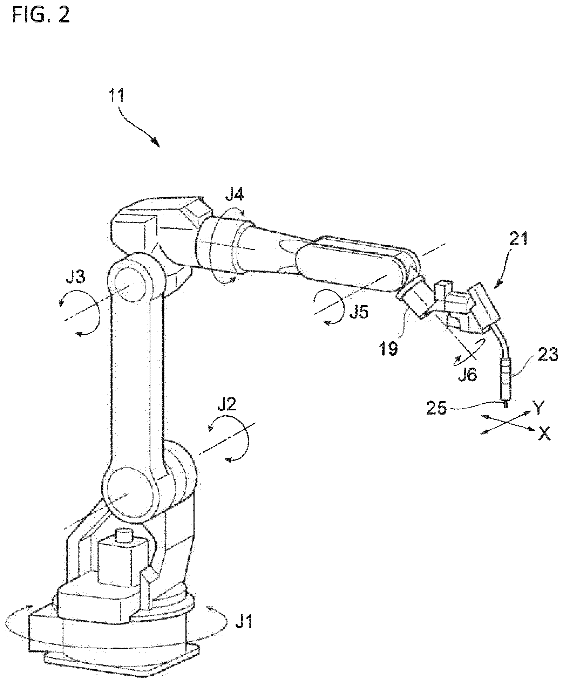

FIG. 2 is a perspective view of an appearance of the articulated robot as an example.

As the articulated robot 11 employed in the welding apparatus 100 having the above configuration, for example, a common 6-axis robot having six drive axes is used. In the illustrated example, an articulated robot that can be driven in six directions J1 to J6 is shown. Instead of the 6-axis robot, for example, a 7-axis robot or an articulated robot having another number of axes may be used. In the following description, the articulated robot is abbreviated as a "robot."

The above-mentioned 2-axis weaver 21 is provided between the tip drive shaft 19 of the robot 11, which is driven in the direction J6, and the welding torch 23. Drive shafts of the robot 11, which are driven in the directions J1 to J6, are driven by drive motors such as servo motors (not shown), respectively. Drive signals are input to the respective drive motors from the control device 13 via a communication line 27 shown in FIG. 1.

### <2-axis weaver>

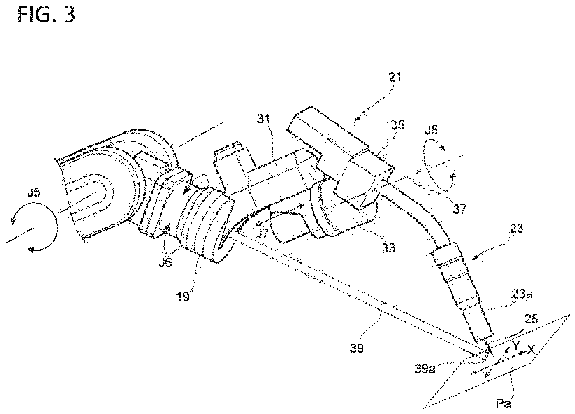

FIG. 3 is an enlarged view of the 2-axis weaver 21 shown in FIG. 2.

The 2-axis weaver 21, which is shown as an example, has a first-axis drive unit 31 that drives the tip shaft 23a of the welding torch 23 in the X-axis direction which is a first-axis direction in a plane Pa which is perpendicular to the tip shaft 23a and a second-axis drive unit 33 that drives the tip shaft 23a in the Y-axis direction which is a second-axis direction perpendicular to the tip shaft 23a and the X-axis direction in the plane Pa. That is, the 2-axis weaver 21 supports the welding torch 23 so that it can move in the X and Y directions which are perpendicular to each other.

The first-axis drive unit 31 and the second-axis drive unit 33 drive the tip shaft 23a of the welding torch 23 in the two orthogonal directions in the plane Pa with a reference position of the tip shaft 23a of the welding torch 23 as the center. The first-axis drive unit 31 has a linear slide unit that moves the second-axis drive unit 33 in a J7 direction which is the X direction. The second-axis drive unit 33 has a rotation unit that supports a torch base portion 35 which supports the welding torch 23 so that it is rotatable in a direction J8 about an axis 37. These linear slide unit and rotation unit are driven by respective drive motors such as servo motors (not shown).

As in the case of each of the drive shafts of the robot 11, drive signals for linear movement in the direction J7 and rotation in the direction J8 are input to the drive motors for the first-axis drive unit 31 and the second-axis drive unit 33, respectively, from the control device 13 via the communication line 27.

Although the 2-axis weaver 21 has the above-described configuration so that the movement is performed by a linear movement in the X direction and by a rotational movement in the Y direction, the present invention is not limited to that case. For example, a configuration such that the movement is performed by a linear movement in both of the X direction and the Y direction and a configuration such that the movement is performed by a rotational movement in both of the X direction and the Y direction may be employed. The configuration such that the movement is performed by rotational movements is easy to be designed and can enhance the sealing performance of shaft sliding portions easily. In the configuration such that the movement is performed by linear movements, the torch tip does not deviate from the work in the height direction even if it is moved a long distance and hence welding properties are less prone to be varied by the manner of a weaving operation.

Furthermore, a shielding gas is supplied to the welding torch 23 from the gas supply apparatus (not shown), whereby involvement of air by the welding torch 23 during welding is prevented. The welding wire 25 is fed to the welding torch 23 from the wire feed device (not shown). An arc point adjustment rod 39 is attached to the tip drive shaft 19 in a detachable manner. A tip portion 39a of the arc point adjustment rod 39 is used for, for example, positioning of a welding position, and the arc point adjustment rod 39 is removed before welding.

### <Configuration and workings of control device>

Next, the configuration of the control device and a welding method with a weaving operation by the control device are described.

The control device 13 shown in FIG. 1 includes a drive control unit 41 that drives the robot 11 and the 2-axis weaver 21 on the basis of input information that is input from the teaching controller 17. In the following, movement operation of a welding torch 23 with a weaving operation by the drive control unit 41 is described. Although the control device 13 includes, in addition to the drive control unit 41, a wire feed control unit that feeds the welding wire 25 to the welding torch 23, a gas supply control unit that supplies a shielding gas to the welding torch 23, a current control unit that controls a welding current from the welding power source 15 and other units, the descriptions thereof are omitted here.

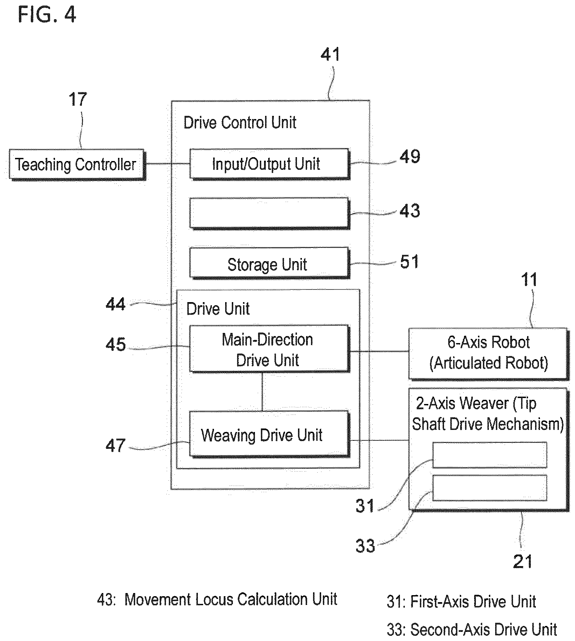

FIG. 4 is a control block diagram for driving the robot 11 and the 2-axis weaver 21 by the drive control unit 41.

The drive control unit 41 changes the position and posture of the welding torch 23 by outputting drive signals to the drive motors for the respective drive shafts of the robot 11, which are driven in the directions J1 to J6, and the drive motors for the first-axis drive unit 31 and second-axis drive unit 33 of the 2-axis weaver 21, respectively.

For those purposes, the drive control unit 41 includes a movement locus calculation unit 43 that determines a movement locus of the tip shaft of the welding torch 23 through calculation and a drive unit 44 that drives the robot 11 and the 2-axis weaver 21. The drive unit 44 includes a main-direction drive unit 45 that mainly moves the welding torch 23 along a welding line without weaving operation by driving the robot 11 and a weaving drive unit 47 that allows the welding torch 23 to perform a weaving movement by driving the 2-axis weaver 21. The drive control unit 41 also includes an input/output unit 49 that reads teaching data such as welding conditions that are input from the teaching controller 17 shown in FIG. 1 and a storage unit 51 that stores the read teaching data and the calculated movement locus.

The teaching controller 17 is connected to the drive control unit 41 via a communication line 55 shown in FIG. 1. An operator drives the robot 11 and the 2-axis weaver 21 by manipulating the teaching controller 17 and thereby sets the tip axis of the welding torch 23 at a position which is a welding point. At this time, as shown in FIG. 3, the welding point can be checked easily by attaching the arc point adjustment rod 39 to the tip drive shaft 19.

Then, the operator determines an operation route of the welding torch 23 by registering a plurality of welding points along a desired welding line. More specifically, the robot 11 is operated by using the teaching controller 17 and a welding line is determined by a PTP control (point-to-point control). Based on the above inputs made by the operator, teaching data including position information of a welding line, a movement speed, a period of a weaving operation and the like are generated in the teaching controller 17. The generated teaching data is sent from the teaching controller 17 to the drive control unit 41 and stored in the storage unit 51 via the input/output unit 49.

Referring to the teaching data stored in the storage unit 51, the movement locus calculation unit 43 divides the operation route of the tip shaft of the welding torch 23 into a plurality of drive steps. The term "drive step" as used herein means an interval between drive time points of a synchronous control of the robot 11 and the 2-axis weaver 21; however, it may be an interval between other time points such as time points determined in any manner.

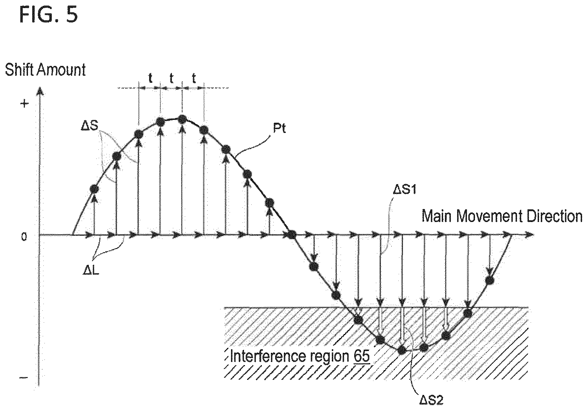

The movement locus calculation unit 43 determines a movement locus of the tip shaft of the welding torch 23 in actual welding by superimposing a movement component based on a weaving operation on the above-determined operation route. As for the movement component based on a weaving operation, for example, as shown in FIG. 5, ΔS as a shift amount is set for each drive step having a prescribed constant interval t. The illustrated example shows a sinusoidal wave weaving locus. Weaving movement components ΔS are set by dividing one period of a desired weaving locus into proper intervals and determining, through calculation, magnitudes of the weaving operation in respective drive steps as the unit drive step which is equal to the thus-determined divisional interval.

In the welding apparatus 100 having the above-described configuration, for weaving movement components ΔS of a weaving operation of the welding torch 23, the welding torch 23 is moved by driving the 2-axis weaver 21, and for the main-direction movement components along the welding line, the welding torch 23 is moved by driving the robot 11. In this driving, when welding is performed along the welding line with a weaving operation of the welding torch 23, the weaving operation is performed only by the 2-axis weaver 21. Thus, no vibration at the above weaving frequency acts on the drive shafts of the robot 11, and hence, a resonance phenomenon is less prone to occur as compared with the case of performing a weaving operation by driving the robot 11. As a result, operations with various weaving patterns can be performed without being restricted by the natural frequency of the robot 11 and a weaving control can be performed with high accuracy at a high frequency.

When the welding torch 23 is moved along the welding line, at a certain welding location, there may occur the case where movement of the welding torch 23 by the 2-axis weaver 21 is disabled in at least a partial region of the amplitude of a weaving locus.

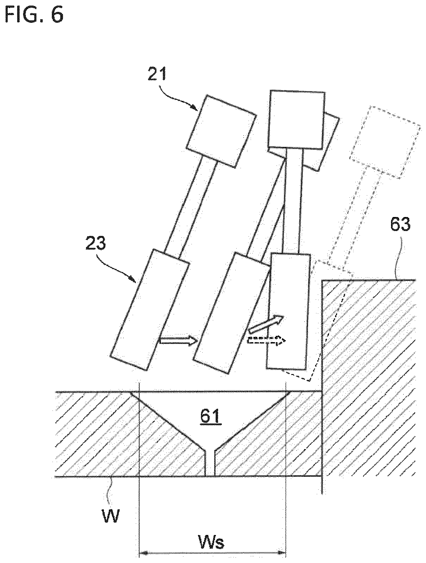

FIG. 6 is a diagram illustrating an example that the welding torch 23 interferes with a member adjacent to the torch. When a weaving operation of the welding torch 23 is performed within a width Ws of a groove 61 of the work W, for example, the welding torch 23 is weaved by driving the first-axis drive unit 31 of the 2-axis weaver 21 shown in FIG. 3, so that the welding torch 23 interferes with a wall 63 adjacent to the groove 61.

In this case, interference with the wall 63 is avoided by driving drive shafts of the robot 11 instead of the 2-axis weaver 21 in a part of the weaving operation of the welding torch 23.

More specifically, as shown in FIG. 5, when the welding torch 23 is moved along a movement locus Pt that is obtained by combining a main-direction movement component ΔL in the main movement direction and a weaving movement component ΔS of a weaving operation in the direction perpendicular to the main movement direction, there may occur the case where an interference region 65 exists within the movement locus Pt. In this case, movement components produced by driving the 2-axis weaver 21 are controlled so as not to enter the interference region 65.

After the movement locus Pt reaches the interference region 65, the 2-axis weaver 21 is driven so that the limited shift amount not entering the interference region 65 is set as a movement limit ΔS1. An excessive portion of a shift amount beyond the movement limit ΔS1 of the movement locus Pt is regarded as a supplemental movement distance ΔS2, and drive shafts of the robot 11 are driven so as to produce the supplemental movement distance ΔS2, whereby the welding torch 23 is moved while changing the posture.

With the above driving, when a weaving operation having a desired weaving locus is performed, in the region where the welding torch 23 interferes with a member adjacent to the torch, the posture of the welding torch 23 is changed through cooperation between the 2-axis weaver 21 and the robot 11 and the welding torch 23 is prevented from interfering with the other member. In this manner, the weaving operation can be performed continuously even in the interference region 65.

More specifically, it is judged whether a weaving movement component ΔS of a movement locus determined by the movement locus calculation unit 43 falls within a movable range where the welding torch 23 can be moved by the 2-axis weaver 21 so as not to enter the interference region 65. When the weaving movement component ΔS falls within the movable range, the weaving drive unit 47 outputs a drive signal corresponding to the weaving movement component ΔS to the 2-axis weaver 21 and thereby moves the tip shaft of the welding torch 23 in the weaving direction. Furthermore, the main-direction drive unit 45 outputs drive signals corresponding to a main-direction movement component ΔL to respective drive shafts of the robot 11 and thereby moves the tip shaft of the welding torch 23 along the welding line. As a result, the welding torch 23 is moved along a movement locus Pt obtained by combining the movements in the weaving direction and the welding line direction.

On the other hand, when the weaving movement component ΔS does not fully fall within the movable range, the weaving drive unit 47 determines a supplemental movement distance ΔS2, that is, an excessive portion of the weaving movement component ΔS beyond the movement limit ΔS1, and outputs, to the 2-axis weaver 21, a drive signal for the movement to the position of the movement limit ΔS1. As a result, the tip shaft of the welding torch 23 is moved to the position of the movement limit ΔS1. At the same time, the weaving drive unit 47 outputs, to the main-direction drive unit 45, a weaving drive signal for driving at least one of the drive shafts included in the robot 11 depending on the supplemental movement distance ΔS2.

The main-direction drive unit 45 outputs, to the robot 11, a combined drive signal for combination of an operation for allowing the tip shaft of the welding torch 23 to perform a weaving operation on the basis of the received weaving drive signal and an operation for allowing drive shafts of the robot 11 to move depending on a main-direction movement component ΔL. That is, the robot 11 is driven on the basis of the combined drive signal for combination of driving by the weaving drive signal that is output from the weaving driving unit 47 and driving corresponding to the main-direction movement component ΔL. As a result, the welding torch 23 is moved along a movement locus Pt which is a desired weaving locus as a combination of a movement in the weaving direction and a movement in the welding line direction.

### <Example of weaving control>

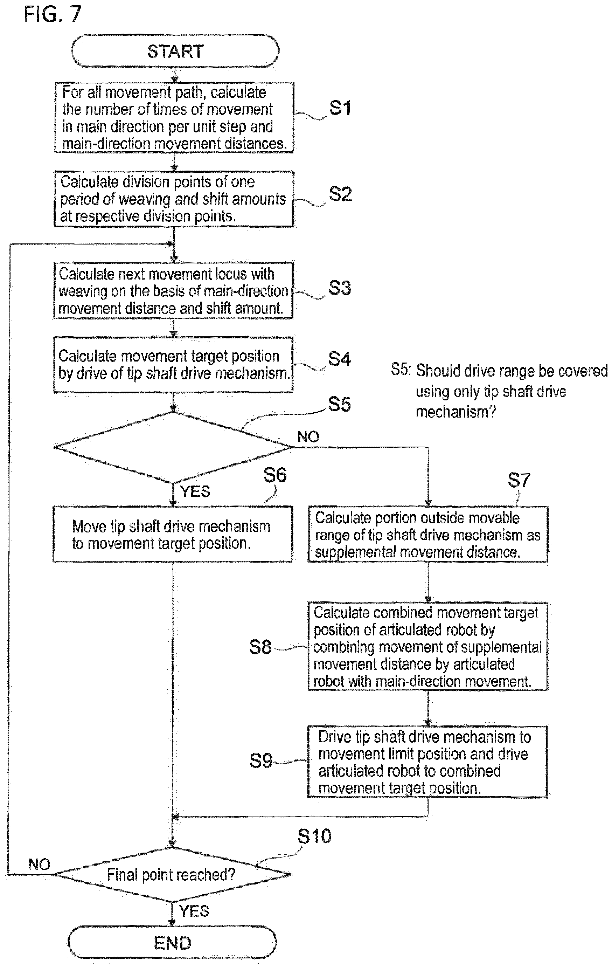

Next, an example of weaving control for moving the tip shaft of the welding torch 23 along a welding line while performing a weaving operation of the tip shaft of the welding torch 23 in accordance with the above-described basic procedure is described with reference to FIG. 7.

FIG. 7 is a flowchart showing the procedure of a weaving control method.

First, a welding line that extends from a welding start point to a welding end point and does not involve weaving is determined using the above-described teaching controller 17. The all movement path of the determined welding line is divided into drive steps. Then, the number of times of movement in the main direction along the welding line per divided unit drive step and main-direction movement distances are calculated (S1). The number of times of movement and movement distances are determined on the basis of a pre-taught point (position), a weaving method, a movement speed and a movement period of the welding torch 23, and other information.

Division points of one period of weaving and shift amounts at the respective division points, that is, weaving movement components ΔS shown in FIG. 5, are calculated (S2).

Then, a movement locus of the welding torch 23 involving a weaving operation is determined through calculation on the basis of a main-direction movement distance determined at step S1 and a shift amount determined at step S2 (S3). In this calculation of a movement locus, main-direction movement distances and shift amounts of respective drive steps are determined for the entire welding line from the welding start point to the welding end point.

A movement target position in the case where the welding torch 23 is moved by driving the 2-axis weaver 21 is determined on the basis of the shift amount determined for each drive step (S4). This movement target position is a movement target position or movement target angle of the 2-axis weaver 21 in the case where the welding torch 23 is moved by driving only the 2-axis weaver 21 without driving the drive shafts of the robot 11.

Then, it is judged whether the determined movement target position falls within a movable range of the 2-axis weaver 21 (S5). In the case where the movement target position is covered by the movable range of the 2-axis weaver 21, the 2-axis weaver 21 is driven up to the movement target position (S6).

On the other hand, in the case where the determined movement target position is located outside the movable range of the 2-axis weaver 21, a portion outside the movable range of the 2-axis weaver 21 is calculated as a supplemental movement distance ΔS2 shown in FIG. 5 (S7). A movement target position of the robot 11 for attaining the supplemental movement distance by drive shafts of the robot 11 is determined. A combined movement target position of the robot 11 is determined by combining the movement target position of the determined supplemental movement distance with the movement target position of a main-direction movement of drive shafts of the robot 11

(S8). The robot 11 is driven to attain the determined combined movement target position and the 2-axis weaver 21 is driven up to the movement limit position (S9). In this manner, the welding torch 23 is moved in the main direction along the welding line and is moved for the weaving operation at the same time, and the welding torch 23 is thereby moved to a movement destination along the movement locus.

The above-described steps S3 to S6 or S9 are executed repeatedly until a welding finishing point (final point) is reached (S10). With this weaving control, a weaving operation can be performed without causing interference with an adjacent member even if the weaving pattern is complex. In particular, sinusoidal waves that are 1 to 10 Hz and 2 to 10 mm in amplitude can be realized with high accuracy. Even a weaving operation at frequencies equal to or higher than 10 Hz can be realized with high accuracy.

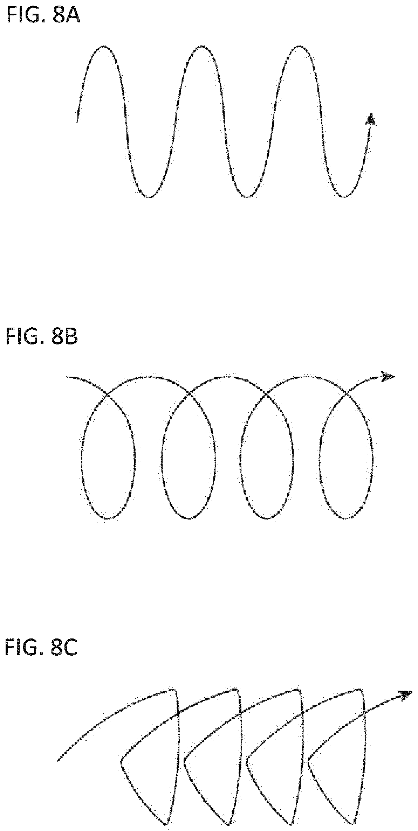

FIG. 8A, FIG. 8B, and FIG. 8C are schematic diagrams showing various weaving patterns.

Although the above-described weaving pattern is a sinusoidal waveform as shown in FIG. 8A, the present invention is not limited to that case. Various other patterns such as a loop-shaped pattern shown in FIG. 8B and a triangular-wave-shaped pattern shown in FIG. 8C can also be employed. A loop-shaped or triangular-wave-shaped weaving pattern can be produced by driving the first-axis drive unit 31 and the second-axis drive unit 33 of the 2-axis weaver 21 at the same time. In either case, a weaving operation is basically performed only by the 2-axis weaver 21. Drive shafts of the robot 11 are used for a weaving operation as supplemental means only when the weaving operation cannot be performed only by the 2-axis weaver 21.

### <Another example of driving of robot 11>

In the above-described weaving control, drive shafts of the robot 11 are driven mainly for main-direction movement. In that case, it is preferable to allow drive shafts of the robot 11 to operate in such directions as to cancel out vibration caused by a weaving operation of the 2-axis weaver 21.

For example, in the case where the 2-axis weaver 21 is reciprocated in one direction, drive shafts of the robot 11 are driven in directions opposite to a generated inertial force at the timing when the direction of the reciprocation movement is changed. As a result, the inertial force generated by the reciprocation movement of the 2-axis weaver 21 is canceled out, whereby vibration of the main body of the robot 11 is reduced. An accurate weaving operation can thereby be performed.

The present invention is not limited to the above embodiment(s). Combining components of different embodiments and an act, made by those skilled in the art, of modifying or applying each embodiment on the basis of the disclosure of the description and known techniques are expected by the present invention and included in the scope of protection.

For example, the tip shaft drive mechanism is not limited to a 2-axis weaver and may be a single-axis weaver or a rotational drive type weaver. Furthermore, the tip shaft drive mechanism may be a weaver having an additional drive shaft(s), that is, a weaver having three or more axes.

Although the above-described welding apparatus is configured so as to include the welding torch as an end effector, the present invention is not limited to that case. For example, a slag removing device that includes a slag chipper for removing slag, a gouging device that includes a gouging torch, or a measuring device that includes a laser sensor may be used as an end effector. Furthermore, a laser welding device that includes a laser welding torch or a spot welding device that includes a spot welding gun may be used.

As described above, the followings are described in the present description.
(1) A welding apparatus comprising:
   an articulated robot having a plurality of drive shafts;
   an end effector supported by the articulated robot;
   a tip shaft drive mechanism which is provided between a tip drive shaft of the articulated robot and the end effector and allows a tip shaft of the end effector to perform a weaving operation; and
   a drive control unit which drives the articulated robot and the tip shaft drive mechanism,
   wherein the tip shaft drive mechanism has a first-axis drive unit which drives the tip shaft in a first-axis direction that is perpendicular to the tip shaft of the end effector and a second-axis drive unit which drives the tip shaft in a second-axis direction that is perpendicular to the tip shaft and the first-axis direction.

   According to this welding apparatus, when welding is performed along a welding line with a weaving operation of a tip shaft of an end effector, the weaving operation can be performed only by a tip shaft drive mechanism. Thus, no vibration at the above weaving frequency acts on the drive shafts of the articulated robot, and hence, a resonance phenomenon is less prone to occur as compared with the case of performing a weaving operation by driving the articulated robot. As a result, operations with various weaving patterns can be performed without being restricted by the natural frequency of the articulated robot and a weaving control can be performed with high accuracy at a high frequency.
(2) A welding apparatus comprising:
   an articulated robot having a plurality of drive shafts;
   an end effector supported by the articulated robot;
   a tip shaft drive mechanism which is provided between a tip drive shaft of the articulated robot and the end effector and allows a tip shaft of the end effector to perform a weaving operation; and
   a drive control unit which drives the articulated robot and the tip shaft drive mechanism, wherein:
      the drive control unit comprises:
         a main-direction drive unit which allows the end effector to move along a welding line by driving the articulated robot; and
         a weaving drive unit which allows the tip shaft to perform a weaving movement, and
      in a case where a desired weaving locus of the tip shaft falls within a movable range of the tip shaft of the tip shaft drive mechanism, the weaving drive unit allows the tip shaft to perform a weaving operation that follows the weaving locus by driving the tip shaft drive mechanism, and
      in a case where the desired weaving locus does not fully fall within the movable range, the weaving drive unit allows the tip shaft to perform a weaving operation that follows the weaving locus by determining a supplemental movement distance of an excessive portion of a weaving movement component of the weaving locus beyond a movement limit of the movable range, driving the tip shaft drive mechanism up to the movement limit, and driving at least one of the drive shafts included in the articulated robot depending on the supplemental movement distance.

   According to this welding apparatus, in the region outside the movable range where the end effector interferes with a member adjacent to the end effector, the posture of the end effector is changed through cooperation between the tip shaft drive mechanism and the articulated robot and the end effector is prevented from interfering with the other member. In this manner, the weaving operation can be performed continuously even in the region outside the movable range where the interference of the end effector occurs.
(3) The welding apparatus according to (1) or (2), wherein the drive control unit drives the articulated robot in a direction to cancel out vibration of the articulated robot, which is caused by the driving of the tip shaft drive mechanism.
   According to this welding apparatus, the inertial force generated by the reciprocation movement of the tip shaft drive mechanism is canceled out, whereby vibration of the main body of the articulated robot is reduced. An accurate weaving operation can thereby be performed.
(4) The welding apparatus according to any one of (1) to (3), wherein the end effector is a welding torch and a tip portion of a consumable electrode is provided at the tip shaft.
   According to this welding apparatus, good weaving can be obtained by arc welding such as MIG welding and MAG welding.
(5) A method for controlling a welding apparatus, which uses a welding apparatus,
   the welding apparatus comprising:
   an articulated robot having a plurality of drive shafts;
   an end effector supported by the articulated robot;
   a tip shaft drive mechanism which is provided between a tip drive shaft of the articulated robot and the end effector and allows a tip shaft of the end effector to perform a weaving operation; and
   a drive control unit which drives the articulated robot and the tip shaft drive mechanism,
   wherein the method comprises driving the tip shaft drive mechanism to move the tip shaft of the end effector in a first-axis direction that is perpendicular to the tip shaft and in a second-axis direction that is perpendicular to the tip shaft and the first-axis direction.
(6) A method for controlling a welding apparatus, which uses a welding apparatus,
   the welding apparatus comprising:
   an articulated robot having a plurality of drive shafts;
   an end effector supported by the articulated robot;
   a tip shaft drive mechanism which is provided between a tip drive shaft of the articulated robot and the end effector and allows a tip shaft of the end effector to perform a weaving operation; and
   a drive control unit which drives the articulated robot and the tip shaft drive mechanism; wherein
   when a weaving operation of the tip shaft of the end effector is performed along a welding line to follow a desired weaving locus,
   in a case where the desired weaving locus falls within a movable range of the tip shaft of the tip shaft drive mechanism, the method comprises driving the tip shaft drive mechanism, thereby performing the weaving operation that follows the weaving locus, and
   in a case where the desired weaving locus does not fully fall within the movable range, the method comprises determining a supplemental movement distance of an excessive portion of a weaving movement component of the weaving locus beyond a movement limit of the movable range, driving the tip shaft drive mechanism up to the movement limit, and driving at least one of the drive shafts included in the articulated robot depending on the supplemental movement distance, thereby performing the weaving operation that follows the weaving locus.
(7) The method for controlling a welding apparatus according to (6), the method comprising:
   determining, through calculation, a movement locus of the weaving operation of the tip shaft of the end effector along the welding line;
   dividing the determined movement locus into a plurality of drive steps;
   determining, for each of the drive steps, a main-direction movement component of a movement of the end effector along the welding line and a weaving movement component for the weaving operation at each position on the welding line; and
   repeating a weaving operation of the tip shaft a number of times that is equal to the number of drive steps.
(8) The method for controlling a welding apparatus according to any one of (5) to (7), wherein the drive control unit drives the articulated robot in a direction to cancel out vibration of the articulated robot, which is caused by the driving of the tip shaft drive mechanism.
(9) The method for controlling a welding apparatus according to any one of (5) to (8), wherein the end effector is a welding torch and a tip portion of a consumable electrode is provided at the tip shaft.

This application is based on Japanese Patent Application No. 2016-27889 filed on February 17, 2016, the contents of which are incorporated herein by reference.

### Description of Reference Numerals and Signs

- 11: Robot (articulated robot)
- 13: Control device
- 15: Welding power source
- 19: Tip drive shaft
- 21: 2-axis weaver (tip shaft drive mechanism)
- 23: Welding torch (end effector)
- 23a: Tip shaft
- 25: Welding wire
- 31: First-axis drive unit
- 33: Second-axis drive unit
- 41: Drive control unit
- 43: Movement locus calculation unit
- 44: Drive unit
- 45: Main-direction drive unit
- 47: Weaving drive unit
- 65: Interference region
- 100: Welding apparatus

## Claims

1. A welding apparatus comprising:
an articulated robot having a plurality of drive shafts;
an end effector supported by the articulated robot;
a tip shaft drive mechanism which is provided between a tip drive shaft of the articulated robot and the end effector and allows a tip shaft of the end effector to perform a weaving operation; and
a drive control unit which drives the articulated robot and the tip shaft drive mechanism,
wherein the tip shaft drive mechanism has a first-axis drive unit which drives the tip shaft in a first-axis direction that is perpendicular to the tip shaft of the end effector and a second-axis drive unit which drives the tip shaft in a second-axis direction that is perpendicular to the tip shaft and the first-axis direction.

2. A welding apparatus comprising:
an articulated robot having a plurality of drive shafts;
an end effector supported by the articulated robot;
a tip shaft drive mechanism which is provided between a tip drive shaft of the articulated robot and the end effector and allows a tip shaft of the end effector to perform a weaving operation; and
a drive control unit which drives the articulated robot and the tip shaft drive mechanism, wherein:
the drive control unit comprises:
a main-direction drive unit which allows the end effector to move along a welding line by driving the articulated robot; and
a weaving drive unit which allows the tip shaft to perform a weaving movement, and
in a case where a desired weaving locus of the tip shaft falls within a movable range of the tip shaft of the tip shaft drive mechanism, the weaving drive unit allows the tip shaft to perform a weaving operation that follows the weaving locus by driving the tip shaft drive mechanism, and
in a case where the desired weaving locus does not fully fall within the movable range, the weaving drive unit allows the tip shaft to perform a weaving operation that follows the weaving locus by determining a supplemental movement distance of an excessive portion of a weaving movement component of the weaving locus beyond a movement limit of the movable range, driving the tip shaft drive mechanism up to the movement limit, and driving at least one of the drive shafts included in the articulated robot depending on the supplemental movement distance.

3. The welding apparatus according to claim 1 or 2, wherein the drive control unit drives the articulated robot in a direction to cancel out vibration of the articulated robot, which is caused by the driving of the tip shaft drive mechanism.

4. The welding apparatus according to claim 1 or 2, wherein the end effector is a welding torch and a tip portion of a consumable electrode is provided at the tip shaft.

5. The welding apparatus according to claim 3, wherein the end effector is a welding torch and a tip portion of a consumable electrode is provided at the tip shaft.

6. A method for controlling a welding apparatus, which uses a welding apparatus,
the welding apparatus comprising:
an articulated robot having a plurality of drive shafts;
an end effector supported by the articulated robot;
a tip shaft drive mechanism which is provided between a tip drive shaft of the articulated robot and the end effector and allows a tip shaft of the end effector to perform a weaving operation; and
a drive control unit which drives the articulated robot and the tip shaft drive mechanism,
wherein the method comprises driving the tip shaft drive mechanism to move the tip shaft of the end effector in a first-axis direction that is perpendicular to the tip shaft and in a second-axis direction that is perpendicular to the tip shaft and the first-axis direction.

7. A method for controlling a welding apparatus, which uses a welding apparatus,
the welding apparatus comprising:
an articulated robot having a plurality of drive shafts;
an end effector supported by the articulated robot;
a tip shaft drive mechanism which is provided between a tip drive shaft of the articulated robot and the end effector and allows a tip shaft of the end effector to perform a weaving operation; and
a drive control unit which drives the articulated robot and the tip shaft drive mechanism; wherein
when a weaving operation of the tip shaft of the end effector is performed along a welding line to follow a desired weaving locus,
in a case where the desired weaving locus falls within a movable range of the tip shaft of the tip shaft drive mechanism, the method comprises driving the tip shaft drive mechanism, thereby performing the weaving operation that follows the weaving locus, and
in a case where the desired weaving locus does not fully fall within the movable range, the method comprises determining a supplemental movement distance of an excessive portion of a weaving movement component of the weaving locus beyond a movement limit of the movable range, driving the tip shaft drive mechanism up to the movement limit, and driving at least one of the drive shafts included in the articulated robot depending on the supplemental movement distance, thereby performing the weaving operation that follows the weaving locus.

8. The method for controlling a welding apparatus according to claim 7, the method comprising:
determining, through calculation, a movement locus of the weaving operation of the tip shaft of the end effector along the welding line;
dividing the determined movement locus into a plurality of drive steps;
determining, for each of the drive steps, a main-direction movement component of a movement of the end effector along the welding line and a weaving movement component for the weaving operation at each position on the welding line; and
repeating a weaving operation of the tip shaft a number of times that is equal to the number of drive steps.

9. The method for controlling a welding apparatus according to any one of claims 6 to 8, wherein the drive control unit drives the articulated robot in a direction to cancel out vibration of the articulated robot, which is caused by the driving of the tip shaft drive mechanism.

10. The method for controlling a welding apparatus according to any one of claims 6 to 8, wherein the end effector is a welding torch and a tip portion of a consumable electrode is provided at the tip shaft.

11. The method for controlling a welding apparatus according to claim 9, wherein the end effector is a welding torch and a tip portion of a consumable electrode is provided at the tip shaft.
